# EUROPEAN PATENT SPECIFICATION

(11) **EP 4 060 312 B1**
(45) Date of publication and mention of the grant of the patent: **18.12.2024**
(21) Application number: 21752995.7
(22) Date of filing: 26.01.2021
(51) Int. Cl.: G01N 1/36

(54) **SPECIAL VERTICAL EMBEDDING BOX FOR FAULT PLASTICIZATION**
SPEZIELLE VERTIKALE EINBETTUNGSBOX ZUR FEHLERPLASTIFIZIERUNG
CUVE D'ENCASTREMENT VERTICALE SPÉCIALE DESTINÉE À LA PLASTIFICATION DE DÉFAUT

(30) Priority: 10.02.2020 CN 202010084586
(43) Date of publication of application: 21.09.2022
(73) Proprietor: Dalian Medical University, Dalian, Liaoning 116044 (CN)
(72) Inventor: SUI, Hongjin, Dalian, Liaoning 116044 (CN); ZHANG, Jianfei, Dalian, Liaoning 116044 (CN)
(74) Representative: Bayramoglu et al.
(86) International application number: PCT/CN2021/073771
(87) International publication number: WO 2021/159954

(56) References cited:
- EP-A1- 3 302 423
- CN-A- 1 480 038
- CN-A- 1 480 038
- CN-A- 1 579 155
- CN-A- 109 666 159
- CN-A- 109 705 804
- CN-A- 111 238 911
- CN-U- 201 464 268
- CN-U- 201 503 363
- CN-U- 203 772 608
- CN-U- 209 727 590
- CN-U- 209 927 553
- CN-Y- 201 335 837
- GB-A- 2 082 041
- JP-A- 2009 063 545
- US-A- 4 389 906
- US-A- 4 595 549

## Description

### Technical Field

The present invention relates to the field of biotechnology detection, and in particular to a special vertical embedding box for tomographic plastination.

### Background Art

In the previous preparation of plastinated slices of biological tissues, it is necessary to prepare a mold similar to a shallow tray that is enclosed circumferentially. After the plastinated slices are dehydrated, they are put in polymers for infiltration, and the slices that have been infiltrated are placed into the shallow tray placed vertically. The mold is put in place, and polymers are re-injected. Then the mold is sealed circumferentially and placed horizontally, and curing and other processes are started. There exist the following problems in the preparation process: firstly, the traditional mold is inconvenient to use during the operation process, and it is easy to spill out liquid medicine; secondly, because the traditional mold is placed horizontally, it needs to be sealed circumferentially, such that bubbles and acetone gases that appear in the liquid medicine are not easy to be discharged, so that infiltration must be performed at first, and polymers need to be added twice before curing, thus causing a large consumption of polymers and a waste of medicine; and thirdly, in the use of the traditional mold, in a curing process, the mold can only be placed horizontally for curing, the temperature is controlled by air convection, the heat dissipation is not good, which is easy to cause explosive polymerization.

The following patent applications CN1480038A, GB2082041A and CN1579155A disclose embedding boxed for tomographic plastination however the process requires performing the steps in a certain order and a high level of dexterity of the person performing it.

### Summary of the Invention

The technical problem to be solved by the present invention is to overcome the shortcomings in the prior art and provide a special vertical embedding box for tomographic plastination.

The present invention is implemented by the following technical solutions:
A special vertical embedding box for tomographic plastination, characterized by comprising two panels oppositely provided and a sealing part provided in the two panels, wherein the sealing part comprises vertical sealing strips and a horizontal sealing strip that are connected between the two panels in a fixed manner, two vertical sealing strips are provided, and the horizontal sealing strip is provided between the lower portions of the two vertical sealing strips and the two panels are fixed by fixing pieces, wherein the two panels are two pieces of tempered glasses; the vertical sealing strips and the horizontal sealing strip are made of silica gel and coated directly on one of the two pieces of tempered glasses.

According to the above technical solution, preferably, the fixing pieces and the panels are detachably connected.

According to the above technical solution, preferably, the fixing pieces comprise a plurality of fixing clips, and the various fixing clips are respectively provided on two sides of the panels and the bottom edge of the panels.

According to the above technical solution, preferably, the vertical sealing strips and the horizontal sealing strip are connected end to end and integrally formed.

The beneficial effects of the present invention are as follows:
Firstly, the embedding box is placed vertically during use, and since the horizontal sealing strip is provided between the lower portions of the two vertical sealing strips, a flat vertical space is formed with one open upper end and the other three sides sealed, infiltration and curing processes for a tomographic specimen are completed in this vertical space. Compared with the previous solution, the sealing on one side is reduced. The exposed surface of the specimen is small, and the liquid medicine will not be spilled out because of the vertical placement. Secondly, since the upper end of the embedding box is not sealed, acetone will escape from the top of the embedding box in the form of air bubbles during the vacuum infiltration process, so that there is no need to add polymers twice before curing, thus reducing process steps and drug consumption. At the same time, the tiny bubbles generated during the curing process can also be discharged at any time, reducing the residual bubbles in the finished product. Thirdly, the vertically provided embedding box can be put into a water bath box for curing, by which the temperature is easily controlled, an explosive polymerization phenomenon will not occur, and the yield of finished products is high. In addition, because the specimen has panels as molds on both sides, the final product is smooth and does not deform.

### Brief Description of the Drawings

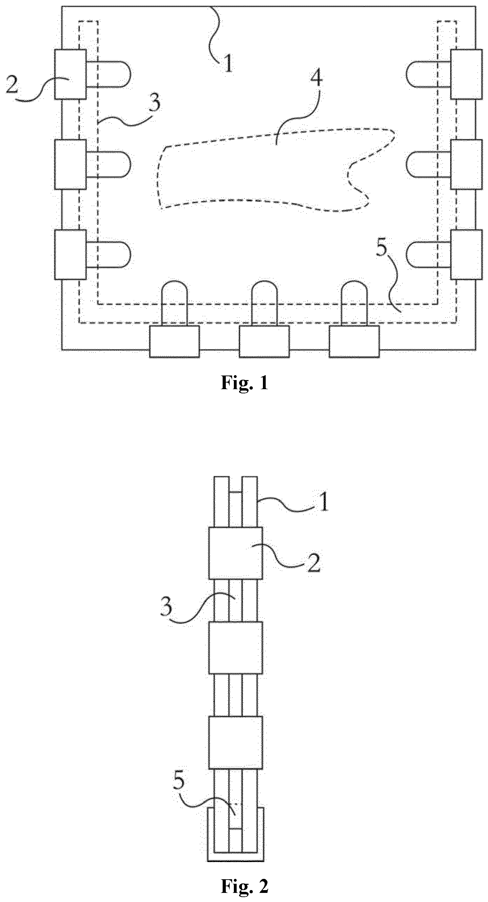

FIG. 1 is a schematic front view of the structure of the present invention.
FIG. 2 is a schematic side view of the structure of the present invention.

In the figures: 1. panel; 2. fixing clip; 3. vertical sealing strip; 4. specimen; 5. horizontal sealing strip.

### Detailed Description of Embodiments

In order to enable those skilled in the art to better understand the technical solutions of the present invention, the present invention will be further described in detail below with reference to the accompanying drawings and the preferred embodiments.

As shown in the figures, the present invention comprises two panels 1 oppositely provided and a sealing part provided in the two panels 1. The sealing part comprises vertical sealing strips 3 and a horizontal sealing strip 5 that are connected between the two panels 1 in a fixed manner. Two vertical sealing strips 3 are provided, and the horizontal sealing strip 5 is provided between the lower portions of the two vertical sealing strips 3. An embedding box is placed vertically during use, and infiltration and curing processes for a tomographic specimen 4 are completed in this vertical space. Compared with the previous solution, the sealing on one side is reduced. The exposed surface of the specimen 4 is small, and the liquid medicine will not be spilled out because of the vertical placement. Since the upper end of the embedding box is not sealed, acetone will escape from the top of the embedding box in the form of air bubbles during the vacuum infiltration process, so that there is no need to add polymers twice before curing, thus reducing process steps and drug consumption. At the same time, the tiny bubbles generated during the curing process can also be discharged at any time, reducing the residual bubbles in the finished product. The vertically provided embedding box can be put into a water bath box for curing, by which the temperature is easily controlled, an explosive polymerization phenomenon will not occur, and the yield of finished products is high. In addition, because the specimen 4 has panels 1 as molds on both sides, the final product is smooth and does not deform.

According to the above embodiment, preferably, the two panels 1 are fixed by fixing pieces. The fixing pieces are provided on two sides and the bottom edge of the two panels 1 to fix the surrounding three sides of the two panels 1 in an assisted manner, thus ensuring sealing.

According to the above embodiment, preferably, the fixing pieces and the panels 1 are detachably connected to facilitate removal of the double-sided tempered glass to obtain a finished slice after the liquid medicine is completely polymerized.

According to the above embodiment, preferably, the fixing pieces comprise a plurality of fixing clips 2, and the various fixing clips 2 are respectively provided on two sides of the panels 1 and the bottom edge of the panels 1.

According to the above embodiment, the panels 1 are pieces of tempered glass, which is convenient for an operator to observe the curing condition of the specimen 4 in the embedding box in real time.

According to the above embodiment, preferably, the material of the vertical sealing strips 3 and the horizontal sealing strip 5 is silica gel or neoprene (not a part of this invention). As a sealing material, silica gel has an outstanding high and low temperature resistance, and a good hydrophobicity, air permeability and insulating property. As a sealing material, neoprene has a good chemical resistance and adhesion, of which the use temperature range is -30°C to +120°C. (Not a part of this invention)

According to the above embodiment, preferably, the vertical sealing strips 3 and the horizontal sealing strip 5 are connected end to end and integrally formed. When the sealing part is made between the two panels 1, the vertical sealing strips 3 and the horizontal sealing strip 5 can also be connected end to end to form a single piece. The forming operation is simple, making the sealing part U-shaped, such that a flat vertical space is formed with one open upper end and the other three sides sealed.

During the use of the present invention, the vertical sealing strips 3 and the horizontal sealing strip 5 are coated on the surface of one piece of tempered glass. The two pieces of tempered glass are provided oppositely through the sealing part. The surrounding three sides of the two pieces of tempered glass are fixed by the fixing clips 2 in an assisted manner, thereby forming a flat vertical space with an open upper end and the other three sides sealed. The embedding box is placed vertically. The specimen 4 is placed between the two pieces of tempered glass from the open upper end, and then a pre-polymerized p45 liquid medicine is poured into the embedding box. After that, the embedding box is put into a vacuum box for vacuum infiltration, and then it is put in a water bath box for curing. After the liquid medicine is completely polymerized, the double-sided tempered glass is removed to obtain a finished slice. In addition, when making the embedding box, it is also possible to place the specimen 4 on the surface of one piece of tempered glass, and then coat the vertical sealing strips 3 and the horizontal sealing strip 5 on the surface of the tempered glass around the specimen 4. The two pieces of tempered glasses are provided oppositely through the sealing part.

The beneficial effects brought by the present invention are as follows: Firstly, the embedding box is placed vertically during use, and since the horizontal sealing strip 5 is provided between the lower portions of the two vertical sealing strips 3, a flat vertical space is formed with one open upper end and the other three sides sealed, infiltration and curing processes for a tomographic specimen 4 are completed in this vertical space. Compared with the previous solution, the sealing on one side is reduced. The exposed surface of the specimen 4 is small, and the liquid medicine will not be spilled out because of the vertical placement. Secondly, since the upper end of the embedding box is not sealed, acetone will escape from the top of the embedding box in the form of air bubbles during the vacuum infiltration process, so that there is no need to add polymers twice before curing, thus reducing process steps and drug consumption. At the same time, the tiny bubbles generated during the curing process can also be discharged at any time, reducing the residual bubbles in the finished product. Thirdly, the vertically provided embedding box can be put into a water bath box for curing, by which the temperature is easily controlled, an explosive polymerization phenomenon will not occur, and the yield of finished products is high. In addition, because the specimen 4 has panels 1 as molds on both sides, the final product is smooth and does not deform.

## Claims

1. A special vertical embedding box for tomographic plastination, wherein comprising two panels (1) oppositely provided and a sealing part provided on the two panels (1), wherein the sealing part comprises vertical sealing strips (3) and a horizontal sealing strip (5) that are connected between the two panels (1) in a fixed manner, two vertical sealing strips (3) are provided, and the horizontal sealing strip (5) is provided between the lower portions of the two vertical sealing strips (3) and the two panels (1) are fixed by fixing pieces (2), wherein the two panels (1) are two pieces of tempered glasses; **characterized in that** the vertical sealing strips and the horizontal sealing strip are made of silica gel and coated directly on one of the two pieces of tempered glasses.

2. The special vertical embedding box for tomographic plastination according to claim 1, wherein the fixing pieces and the panels are detachably connected.

3. The special vertical embedding box for tomographic plastination according to claim 2, wherein the fixing pieces comprise a plurality of fixing clips, and the various fixing clips are respectively provided on two sides of the panels and the bottom edge of the panels.

4. The special vertical embedding box for tomographic plastination according to any one of claims 1 to 3, wherein the vertical sealing strips and the horizontal sealing strip are connected end to end and integrally formed.

## Patentansprüche

1. Spezielle vertikale Einbettungsbox für tomographische Plastination, die zwei Platten (1) umfasst, die entgegengesetzt bereitgestellt sind, und ein Abdichtungsteil, das an den beiden Platten (1) bereitgestellt ist, wobei das Abdichtungsteil vertikale Abdichtungsstreifen (3) und einen horizontalen Abdichtungsstreifen (5) umfasst, die zwischen den beiden Platten (1) in feststehender Weise verbunden sind, zwei vertikale Abdichtungsstreifen (3) bereitgestellt sind, und der horizontale Abdichtungsstreifen (5) zwischen den unteren Abschnitten der beiden vertikalen Abdichtungsstreifen (3) bereitgestellt ist, und die beiden Platten (1) durch Befestigungsstücke (2) befestigt werden, wobei die beiden Platten (1) zwei Hartglasscheiben sind; **dadurch gekennzeichnet, dass** die vertikalen Abdichtungsstreifen und der horizontale Abdichtungsstreifen aus Silikagel hergestellt und direkt auf einer der beiden Hartglasscheiben aufgebracht sind.

2. Spezielle vertikale Einbettungsbox für tomographische Plastination nach Anspruch 1, wobei die Befestigungsstücke und die Platten abnehmbar verbunden sind.

3. Spezielle vertikale Einbettungsbox für tomographische Plastination nach Anspruch 2, wobei die Befestigungsteile eine Vielzahl von Befestigungsklammern umfassen und die verschiedenen Befestigungsklammern jeweils an zwei Seiten der Platten und der Unterkante der Platten bereitgestellt sind.

4. Spezielle vertikale Einbettungsbox für tomographische Plastination nach einem der Ansprüche 1 bis 3, wobei die vertikalen Abdichtungsstreifen und der horizontale Abdichtungsstreifen Ende an Ende verbunden und einstückig gebildet sind.

## Revendications

1. Boîte d'encastrement verticale spéciale destinée à la plastification tomographique, comprenant deux panneaux (1) disposés de manière opposée et une partie de scellement disposée dans les deux panneaux (1), dans lequel la partie de scellement comprend des bandes de scellement verticales (3) et une bande de scellement horizontale (5) qui sont reliées entre les deux panneaux (1) d'une manière fixe, deux bandes de scellement verticales (3) sont disposées, et la bande de scellement horizontale (5) est disposée entre les parties inférieures des deux bandes de scellement verticales (3) et les deux panneaux (1) sont fixés par des pièces de fixation (2), dans laquelle les deux panneaux (1) sont des morceaux de verre trempé ; **caractérisée en ce que** les bandes de scellement verticales et la bande de scellement horizontale sont fabriquées un gel de silice et revêtues directement sur l'un des deux morceaux de verre trempé.

2. Boîte d'encastrement verticale spéciale destinée à la plastification tomographique selon la revendication 1, dans laquelle les pièces de fixation et les panneaux sont reliés de manière détachable.

3. Boîte d'encastrement verticale spéciale destinée à la plastification tomographique selon la revendication 2, dans laquelle les pièces de fixation comprennent une pluralité de clips de fixation, et les divers clips de fixation sont respectivement prévues sur deux côtés des panneaux et le bord inférieur des panneaux.

4. Boîte d'encastrement verticale spéciale destinée à la plastification tomographique selon l'une quelconque des revendications 1 à 3, dans laquelle les bandes de scellement verticales et la bande de scellement horizontale sont reliées bout à bout et formées d'un seul tenant.
